**Europäisches Patentamt**

**European Patent Office**

**Office européen des brevets**

(19)

(11) Numéro de publication: **0 113 272 B1**

## (12) FASCICULE DE BREVET EUROPEEN

(45) Date de publication du fascicule du brevet: **27.01.88**

(51) Int. Cl.⁴: **H 04 Q 3/68, H 04 L 11/20**

(21) Numéro de dépôt: **83402420.0**

(22) Date de dépôt: **14.12.83**

(54) Réseau maillé modulaire de communications.

(30) Priorité: **14.12.82 FR 8220969**

(43) Date de publication de la demande:
**11.07.84 Bulletin 84/28**

(45) Mention de la délivrance du brevet:
**27.01.88 Bulletin 88/4**

(84) Etats contractants désignés:
**DE FR GB IT NL**

(56) Documents cités:
**DE - A - 2 542 579**

**IEEE INTERNATIONAL CONFERENCE ON COMMUNICATIONS, 16-18 juin 1975, San Francisco, pages 22-15 - 22-19, New York, US K. RAHKO: "Comparison of different connecting networks: grid connecting network and its control with microprocessors"**
**PROCEEDINGS OF THE THIRD INTERNATIONAL CONFERENCE ON COMPUTER COMMUNICATIONS, 3-6 août 1976, pages 340-342, Toronto, CA R.R. JUENEMAN et al.: "Explicit path routing in communications networks"**

(73) Titulaire: **THOMSON-CSF, 173, Boulevard Haussmann, F-75379 Paris Cédex 08 (FR)**

(72) Inventeur: **Galipon, Jean, THOMSON-CSF SCPI 173, bld Haussmann, F-75379 Paris Cedex 08 (FR)**

(74) Mandataire: **Benoit, Monique et al, THOMSON-CSF SCPI 19, avenue de Messine, F-75008 Paris (FR)**

## Description

La présente invention concerne un réseau maillé modulaire de communications. Un tel réseau est destiné à assurer des échanges de données entre des équipements, ou systèmes notamment dans le cas d'un système de traitement de données à architecture distribuée.

Un réseau modulaire de communications relevant de l'art antérieur est décrit dans le brevet français 2 366 754 intitulé réseau de commutation modulaire. Un tel réseau est constitué par des ensembles de commutation élémentaires tous identiques reliés entre eux selon un réseau maillé, et groupés de façon telle que les liaisons s'effectuent selon une première loi à l'intérieur d'un groupe et selon une seconde loi de groupe à groupe. Cette façon de faire présente un certain nombre d'incovénients comme par exemple la non adaptabilité du réseau à l'architecture interne d'un bâtiment dans lequel il est implanté, le rendant complexe et la dégradation relativement considérable de la transmission en cas de défaillance d'un ensemble élémentaire de commutation, principalement si le réseau n'est pas suffisamment redondant.

Le document = IEEE INTERNATIONAL CONFERENCE ON COMMUNICATIONS, 16–18 juin 1975, San Francisco, pages 22–15 – 22–19, New York, US décrit un réseau téléphonique dans lequel les abonnés sont reliés aux nœuds d'un réseau d'interconnexion.

Le document = PROCEEDINGS OF THE THIRD INTERNATIONAL CONFERENCE ON COMPUTER COMMUNICATION, 3–6 août 1976, pages 340–342, Toronto, CA, décrit un réseau de communication comportant également des nœuds interconnectés, permettant d'éviter tout recours à un système centralisé par le fait qu'il comporte, pour chaque message à transmettre, un mot binaire de contrôle indiquant notamment le trajet à suivre.

L'invention vise, elle, un réseau maillé ne présentant pas les inconvénients rappelés ci-dessus.

D'une façon générale, le réseau suivant l'invention assure les échanges de données entre deux dispositifs terminaux qui lui sont connectés de façon autoadaptative, c'est-à-dire que la connexion d'un équipement terminal dit demandeur à l'équipement terminal dit destinataire s'effectue de proche en proche d'un nœud de connexion à un autre du réseau à travers des conduits de transmission de données qui les relient.

Cette disposition implique que chaque nœud, qui suivant l'invention est relié à un certain nombre d'autres nœuds du réseau, comporte des moyens qui lui permette de rechercher un nœud adjacent par l'intermédiaire duquel il pourra faire progresser la connexion qui est à établir entre les terminaux demandeur et destinataire.

L'invention vise ainsi également la définition d'un nœud autoadaptatif d'un réseau maillé modulaire.

L'invention a pour objet un réseau maillé modulaire de communication, tel que défini par la revendication 1.

D'autres particularités et avantages de l'invention apparaîtront au cours de la description d'une réalisation d'un réseau maillé modulaire de communications suivant l'invention, donné à l'aide des figures qui représentent:

– la figure 1, une représentation schématique d'un réseau suivant l'invention,
– la figure 2, les mots du vocabulaire réseau,
– la figure 3, une représentation symbolique de l'élément principal d'un nœud,
– la figure 4, un schéma d'établissement d'un itinéraire entre un terminal demandeur et un terminal destinataire à travers le réseau,
– la figure 5, une représentation schématique d'un réseau à 64 nœuds de degré 4, homogène, complet et fermé,
– la figure 6, une représentation du réseau maillé avec des multisélecteurs actifs et au repos,
– la figure 7, une représentation schématique de la procédure de concaténation d'un itinéraire entre un terminal demandeur et un terminal destinataire,
– la figure 8, une représentation d'un itinéraire entre deux terminaux,
– la figure 9, le schéma de répartition des modules d'un nœud autour d'un module de gestion et de routage central,
– la figure 10, une représentation de liaison entre deux modules d'un nœud,
– la figure 11, une représentation de la liaison entre un module et le module de gestion et de routage,
– la figure 12, un diagramme schématique du test de l'état d'un module,
– la figure 13, un diagramme des temps lors de l'opération de connexion d'un module,
– la figure 14, un diagramme schématique indiquant la sollicitation par un module i d'un nœud N1 d'un module i' d'un nœud adjacent, et
– la figure 15, le diagramme schématique fonctionnel d'un module remplissant la fonction routage.

Ainsi que cela a été expliqué dans l'introduction à la présente description, l'invention a pour but de définir un réseau maillé modulaire de communications, qui sont transparents à l'utilisation, qui permette plusieurs liaisons simultanées à fort débit, qui soit peu vulnérable et reconfigurable en cas de panne ou de destruction partielle. Le système comporte principalement, d'une part, des nœuds de connexion et des conduits, assurant la transmission d'informations entre les nœuds, et, d'autre part, des dispositifs terminaux, reliés par des conduits aux nœuds du réseau et aux équipements et systèmes émetteurs et récepteurs d'informations, appelés ci-après «appareils», les terminaux formant une interface entre le réseau et les appareils. Le fait d'être transparent implique que l'établissement d'une connexion entre deux appareils, à travers le réseau, se fait en deux temps. Dans un premier temps il y a recherche et établissement de la connexion proprement dite entre deux terminaux et, dans un deuxième temps, connexion des appareils aux terminaux, permettant la transmission des données. Une commande de déconnexion émise par un terminal permet de rompre la liaison et de libérer tous les composants de la liaison. Le réseau suivant l'invention étant à commande et contrôle répartis, l'établissement d'une connexion, ainsi que cela a été également signalé se fait de proche en proche, d'un nœud à un nœud adjacent. Un nœud doit de la sorte comporter des moyens lui permettant de trouver un chemin qui soit libre vers un nœud adjacent pour faire progresser la connexion pas à pas et la mettre à l'abri d'une panne d'un dispositif centralisé, un chemin pouvant généralement toujours être trouvé à destination d'un des nœuds adjacents du nœud considéré, chaque nœud étant connecté à un nombre fini déterminé d'autres nœuds.

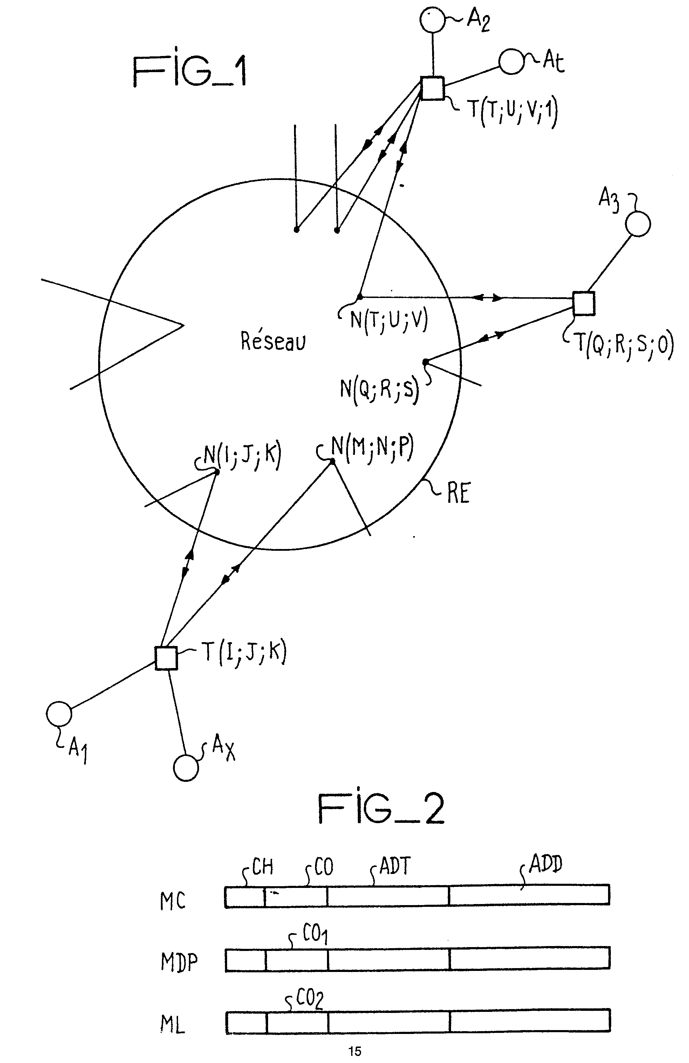

La figure 1 donne une représentation très simple du réseau suivant l'invention. Celui-ci est constitué par un ensemble géographiquement borné dont les dimensions maximales dépendent des applications. Selon la capacité de transport demandée, le nombre N de nœuds du réseau peut varier de quelques unités à plusieurs centaines. Ces nœuds sont reliés entre eux par des conduits capables de transporter les informations dans les deux sens.

Le réseau étant tridimensionnel, les nœuds sont définis par trois coordonnées par exemple IJK, MNP, QRS, TUV.

Sur la figure 1, on a représenté schématiquement des appareils (équipements, sous-systèmes ou systèmes At, Ax, A1, A2, A3 qui doivent échanger des données à travers le réseau suivant l'invention. Ces appareils sont dans ce but raccordés à des matériels spécifiques appelés terminaux et repérés T. On désigne par RE le réseau proprement dit, constitué par les nœuds N et leurs conduits d'interconnexion. Les terminaux T qui doivent réaliser la concentration de données provenant des appareils et l'interface entre les appareils et le réseau, présentent des similitudes avec les nœuds et bien qu'extérieurs au réseau RE proprement dit, ils lui sont raccordés par des liaisons bidirectionnelles disponibles dans chaque nœud. Un terminal T peut ainsi être disposé n'importe où dans le réseau et, comme un nœud, il est défini par trois coordonnées (I, J, K) par exemple. Comme un nœud il possède en général un nombre d'entrées-sorties banalisées, pour la connexion au réseau, qui peut être égal à celui d'un nœud. Ainsi donc, n'importe quelle entrée-sortie «réseau» d'un terminal peut être reliée à n'importe quelle entrée-sortie d'un nœud. Dans un exemple de réalisation, le nombre des entrées-sorties des terminaux et des nœuds est égal à huit.

Suivant la configuration représentée figure 1, un terminal T (IJK), appelé terminal envoyeur ou demandeur, met en œuvre la procédure visant à établir une connexion entre des appareils, A1 et A3 par exemple. Via le nœud N(MNP), ou tout autre nœud auquel le terminal demandeur est connecté, une connexion est établie entre le terminal demandeur T(IJK) et le terminal destinataire T(QRS), ou terminal demandé, auquel est connecté l'autre appareil A3. Par l'intermédiaire de cette connexion, bidirectionnelle et simultanée dans le cas général, l'appareil A1 transmet des directives au terminal T(IJK) rédigées selon une grammaire, syntaxe et sémantique appropriées, qui contiennent l'ordre donné au terminal T(IJK) d'établir une connexion entre A1 et A3. Dans d'autres cas, si par exemple les connexions sont prédéterminées dans les terminaux, ce sont ces derniers qui prennent l'initiative de la transmission des directives.

La figure 2 donne un exemple de mots utilisés par le réseau suivant l'invention pour commander une connexion et les modifications qu'il subit au fur et à mesure qu'un nœud atteint par la connexion recherche un nœud adjacent. On a également représenté sur cette figure 2 un mot de connexion. Ces mots sont les mots du vocabulaire spécifique du réseau qui sont associés aux mots dits d'information.

Les mots du vocabulaire réseau ou mots réseaux sont les mots de connexion MC, les mots de déconnexion partielle MDP et les mots de libération ML. Chaque mot comporte dans l'exemple de la figure 2, quatre champs. Pour le mot de connexion MC, le premier champ CH, à 3 bits indique que le mot est un mot réseau; le second champ CO représente un code indiquant qu'il s'agit d'une connexion; le troisième champ ADT représente l'adresse du terminal destinataire, qui comporte 12 bits; le quatrième champ ADD représente l'adresse du dernier nœud atteint par l'itinéraire, il comporte également 12 bits. Au fur et à mesure de l'établissement de l'itinéraire à travers le réseau, ce champ est modifié.

Un mot de déconnexion partielle MDP a un format semblable à celui du mot de connexion, mais le deuxième champ CO1 représente un code indiquant une déconnexion partielle. Un mot de libération ML a un format semblable au précédent mais le deuxième champ CO2 représente un code indiquant une libération.

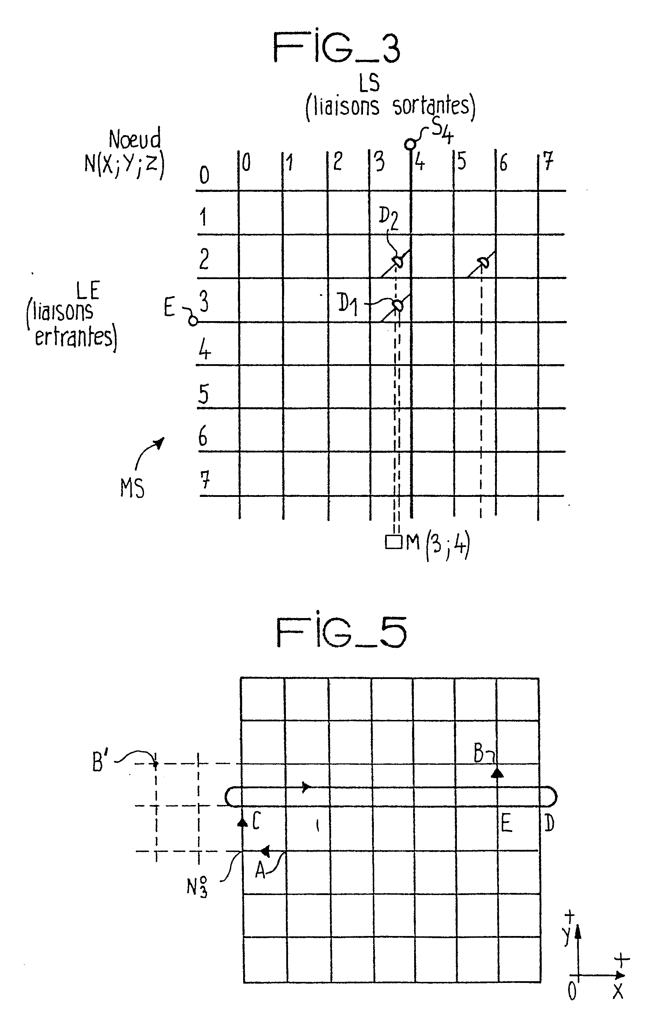

La figure 3 représente l'élément principal d'un nœud, sous la forme symbolique et simplifiée d'une grille matricielle carrée symbolisant un multisélecteur MS à 8 liaisons entrantes LE et 8 liaisons sortantes LS. Les croisements des mailles normalement isolants, peuvent par des commandes externes devenir conducteurs du signal provenant de la liaison entrante en direction de la liaison sortante. Les signaux transitant dans les multisélecteurs des nœuds étant binaires, les points de croisement peuvent être assimilés à des circuits logiques «ET» à deux entrées et une sortie, repérés D1, D2. Ainsi lorsqu'un marqueur M, qui comme on le verra par la suite est une mémoire, porte et maintient le signal logique «1», le circuit «ET», D1 par exemple, placé au croisement géographique des conduits LE(3) et LS(4), conduit effectivement à la borne de sortie S4 tout signal de même définition électrique que celui issu du marqueur M.

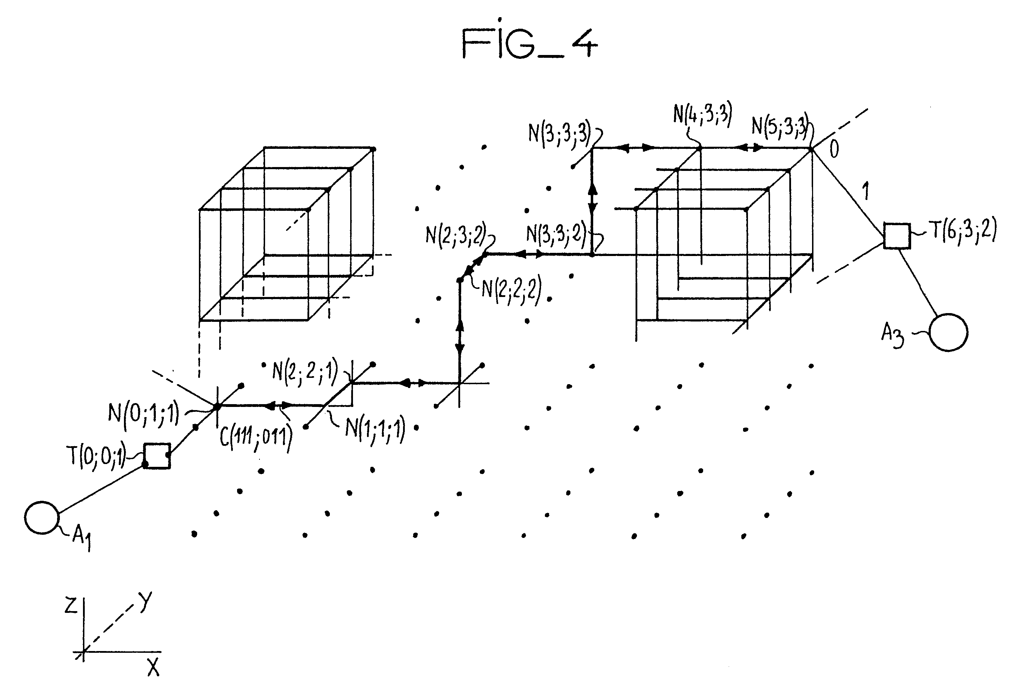

La figure 4 montre de façon schématique comment s'établit le mécanisme de la création d'un itinéraire suivi par les signaux échangés entre deux appareils, une fois la connexion complètement établie et validée entre les appareils A1 et A3, connectés respectivement au terminal demandeur T(001) et au terminal destinataire T(632). Au niveau de chaque terminal et de chaque nœud, des circuits appropriés comme cela sera expliqué par la suite, exécutent un algorithme de routage à partir du mot de connexion, qui tend à faire choisir la maille qui, si elle est disponible, rapproche le plus du terminal destinataire.

Suivant la figure 4, on suppose que l'algorithme exécuté dans le terminal demandeur a choisi la maille le reliant par exemple au nœud N(011).

Conformément à l'invention, le terminal demandeur émet vers le nœud N(011) un message de connexion, tel que montré figure 2, comportant en particulier l'adresse du terminal destinataire, l'adresse de l'entité qui émet le mot de connexion, ici par conséquent l'adresse du terminal demandeur T(001).

Le nœud N(011) exécute à son tour le même algorithme, à la suite de quoi le conduit C(111,011) c'est-à-dire la maille reliant les nœuds N(011) et N(111) est choisi.

Ce processus de sélection se répète de proche en proche jusqu'à l'arrivée au terminal destinataire T(6,3,2) à la suite de quoi les deux terminaux sont réunis par une liaison directionnelle simultanée.

L'algorithme de routage est mis en œuvre par des circuits logiques faisant partie du nœud qui vient d'être atteint par un itinéraire en cours de formation.

La base de données à partir de laquelle cet algorithme est exécuté est constituée par la liste des liaisons sortantes de ce nœud faisant déjà partie d'un itinéraire et il va de soi que la libération d'une connexion utilisant cet itinéraire entraîne l'effacement correspondant dans cette liste. Le nœud en question est dénommé nœud de terminaison provisoire, les autres faisant partie du même itinéraire, nœuds de transit.

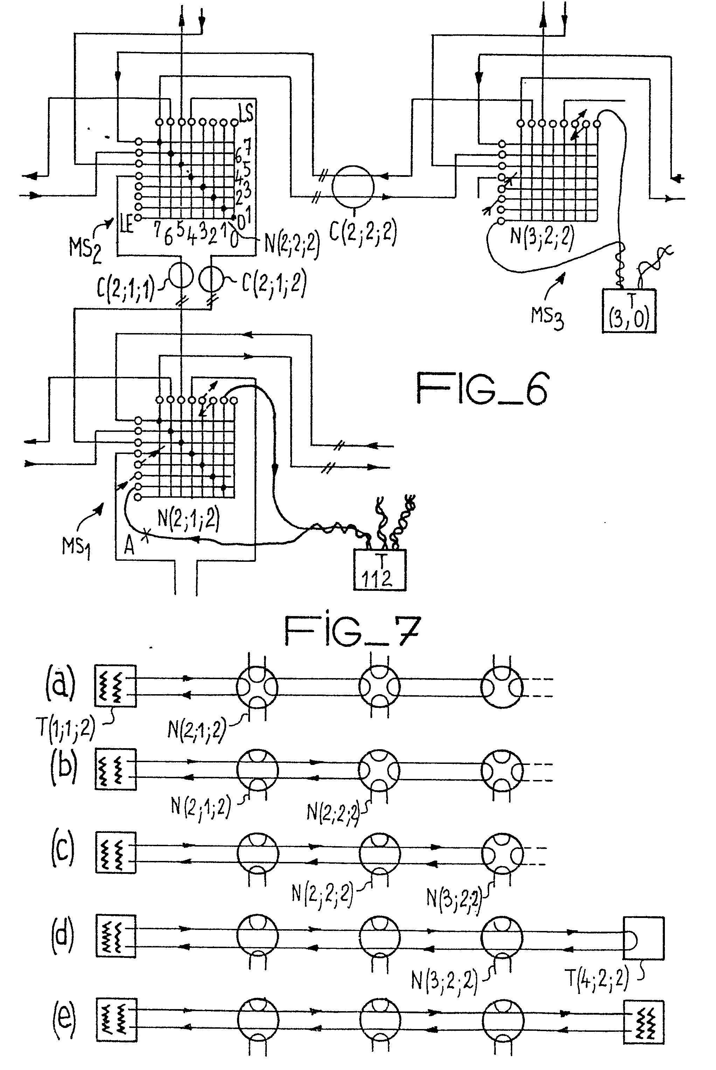

La figure 5 représente schématiquement un réseau de 64 nœuds, de degré 4, homogène, complet et fermé et à titre d'exemple, on suppose qu'il faut tracer un itinéraire depuis le nœud N(1;3) (point A) au nœud N(6;5) (point B) en l'absence de tout obstacle.

Les circuits du nœud A exécutent un algorithme simple:
a) produire toutes les représentations du point B, modulo 8 et inférieures à 8, soit (6;5),(−2;−3),(6;−3);
b) effectuer les soustractions en valeur algébrique, élément par élément, puis la sommation des valeurs absolues des restes ainsi obtenus de coordonnées du point A par rapport aux quatre représentations précédentes de B;

$$\begin{vmatrix}6 & 1\\ & -\\ 5 & 3\end{vmatrix} \rightarrow \begin{vmatrix}5\\2\end{vmatrix} \rightarrow 7$$

$$\begin{vmatrix}-2 & 1\\ & -\\ 5 & 3\end{vmatrix} \rightarrow \begin{vmatrix}3\\2\end{vmatrix} \rightarrow 5$$

$$\begin{vmatrix}-2 & 1\\ & -\\ -3 & 3\end{vmatrix} \rightarrow \begin{vmatrix}3\\6\end{vmatrix} \rightarrow 9$$

$$\begin{vmatrix}6 & 1\\ & -\\ -3 & 3\end{vmatrix} \rightarrow \begin{vmatrix}5\\6\end{vmatrix} \rightarrow 11$$

c) sélectionner la distance minimale, 5 en l'occurrence, ce qui permet de sélectionner les coordonnées de représentation (−2,5), noté B′ sur la figure;
d) effectuer la différence algébrique entre les coordonnées de représentation déterminées par l'étape précédente et celles du nœud de terminaison transitoire (A): dans l'exemple considéré, cela donne $\binom{-3}{2}$;
e) choisir parmi les directions disponibles et elles seules, celle dont le produit scalaire avec la différence vectorielle calculée lors de l'étape précédente;
d) est maximal; dans le cas présent, les quatre directions sont supposées toutes disponibles:

$$(-3\ 2) \overset{+}{\times} \begin{pmatrix}1 & 0 & -1 & 0\\0 & 1 & 0 & -1\end{pmatrix} \rightarrow (-3\ 2\ 3\ -2)$$

ce qui donne la direction (−1;0);
f) tester la direction précédemment choisie (−1;0);
Si le test est positif, faire la prise de la direction en question et transférer la qualification de nœud de terminaison transitoire au nœud N(0;3).

Sinon, tester la direction $\binom{0}{1}$ dont le produit scalaire avec le vecteur $\overrightarrow{AB'}$ quoique non maximal, encore positif.

Si, parmi toutes les directions disponibles, c'est-à-dire celles qui ne sont pas prises par un autre itinéraire, aucune n'est à la fois en état de fonctionnement et convenablement orientée (de produit scalaire positif avec le vecteur défini ci-dessus), on recommence l'algorithme de routage à partir de la représentation de B par les coordonnées (6;5).

On notera que s'il n'y a qu'une seule direction disponible et en état de marche, celle-ci sera prise obligatoirement, mais la représentation modulo 8 choisie du nœud destinataire sera celle pour laquelle la distance sera minimale.

Deux variantes de cet algorithme sont également possibles:
— la première consiste à prendre la meilleure sortie parmi les différentes sorties du nœud, même s'il y a un risque de revenir en arrière, cas où le produit scalaire calculé plus haut est négatif;
— la deuxième variante consiste à ne prendre une maille que si elle rapproche effectivement du terminal destinataire, cas où le produit scalaire est positif.

On va dans ce qui suit indiquer comment, suivant l'invention, se construit un itinéraire entre terminal envoyeur et terminal destinataire sous l'action conjointe de l'algorithme de routage qui a été défini et des multisélecteurs des nœuds dont on a donné une description simple et une représentation symbolique figure 3. Cette action est initialisée à partir du terminal envoyeur comme déjà dit par des mots de connexion de n bits, spécifiques en format, syntaxe et sémantique de la fonction connexion et un itinéraire se forme progressivement par concaténation de conduits bidirectionnels joignant un nœud à ses voisins dont le nombre ne dépasse jamais 8 dans l'exemple décrit. Par concaténation on entend le processus qui consiste à former une chaîne ou itinéraire à l'aide de mailles ou conduits successifs. Il est rappelé qu'un conduit n'est ainsi pris que s'il n'est pas utilisé par une communication en cours, ce qui est indiqué par un registre de mémorisation. Comme cela sera mieux compris par la suite, la prise est accompagnée d'un test de l'état du conduit et des nœuds de part et d'autre.

Dans la représentation du réseau maillé suivant la figure 6, les multisélecteurs MS1 du nœud N(212), MS2 du nœud N(222) et MS3 du nœud N(322) sont dans des positions dites de repos lorsque tous leurs points de croisement diagonaux, et uniquement eux, sont actifs. Si cela est le cas de tous les multisélecteurs, aussi bien ceux des nœuds que ceux des terminaux, le réseau lui-même est dit en position de repos. Le multisélecteur dont tous les points de croisement sont inactifs est dit inactif et il en est de même du réseau lorsque tous ses multisélecteurs le sont. On notera que tous les points de croisement activés sont signalés par un petit cercle noir lorsqu'ils sont diagonaux, par des cercles de plus grande dimension lorsqu'ils ne le sont pas. On a représenté également sur cette figure les conduits C(2,1,1); C(2,1,2) et C(2,2,2) utilisant les liaisons bidirectionnelles entre les nœuds.

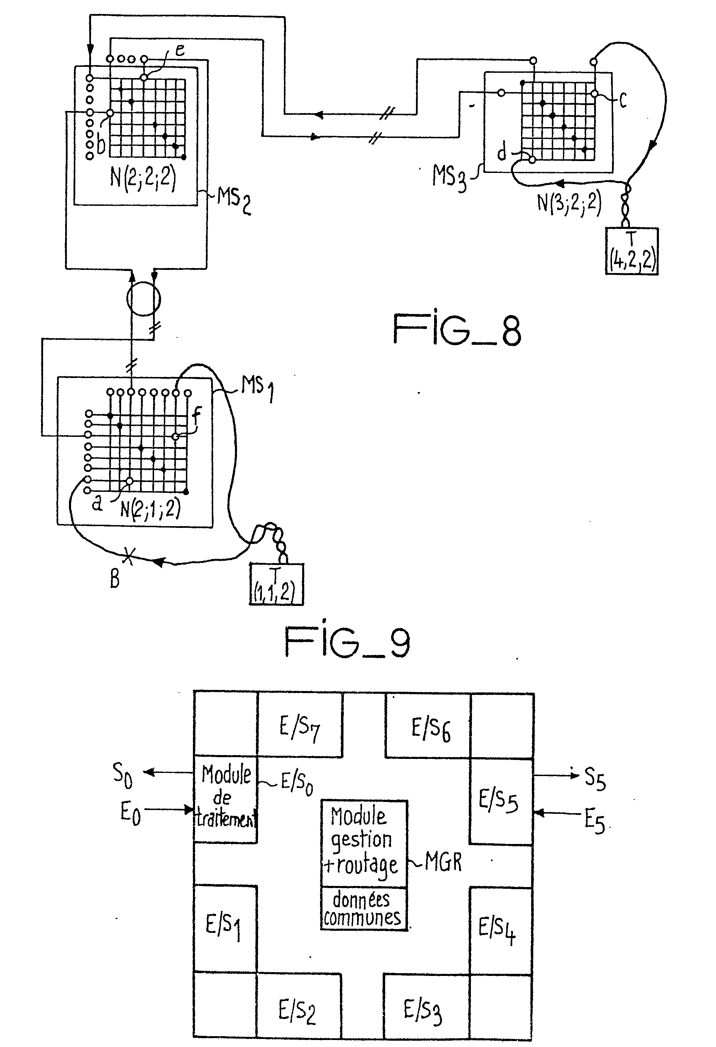

Chaque maille est faite de deux conduits, un pour chaque sens. Le processus de traçage d'un itinéraire se résume aux concaténations successives de mailles internodales à l'itinéraire déjà tracé, qui est lui-même formé de mailles et, ce, à partir du terminal demandeur jusqu'au terminal destinataire. La figure 7 rend compte de la procédure de concaténation effectuée lors de la formation d'un itinéraire montré figure 8. On voit sur cette figure 8; à titre d'exemple, que la propagation des signaux binaires se fait normalement de a vers c et de d vers b dès lors que le multisélecteur MS2 du nœud N(2;2;2) connecte effectivement les nœuds N(2;1;2) et N(3;2;2) par l'intermédiaire des multisélecteurs MS1 et MS3.

La procédure décrite ci-dessus est exécutée par un nœud N dès l'instant où, sous l'action d'un autre nœud, nécessairement contigu, le nœud N devient de terminaison transitoire.

En se référant à la figure 7, la procédure est la séquence d'événements qui, en prenant comme exemple le nœud N(2;2;2) de la configuration en figure 7b, fait aboutir à la configuration de la figure 7c.

Cette procédure nécessite des échanges d'informations entre nœuds et entre nœuds et terminaux: ceci n'est possible que grâce à l'utilisation d'un vocabulaire réseau, qui consiste, comme cela a été déjà évoqué, en un ensemble de mots de format, syntaxe et sémantique spécifiques du réseau. Il est bien entendu alors que l'intersection de ce vocabulaire avec l'ensemble des mots d'information circulant dans le réseau est vide.

A l'aide de la figure 7 on va décrire la succession des événements permettant de passer par exemple de la figure 7b à la figure 7c. Le nœud N(2;2;2) a reçu du nœud N(2;1;2) un mot de connexion comportant l'adresse du terminal destinataire et l'adresse du dernier nœud par lequel a passé l'itinéraire, c'est-à-dire N(2;1;2). Le nœud terminal N(2;2;2) cherche alors une direction libre à l'aide de l'algorithme de routage.

S'il trouve une direction libre, il reforme un nouveau mot de connexion qui comporte l'adresse du destinataire et la sienne propre N(2;2;2). Il émet ensuite ce mot sur la direction choisie, c'est-à-dire dans l'exemple choisi vers le nœud N(3;2;2). Ce mot est reçu par le nœud N(3;2;2) et réémis instantanément sur la liaison retour de la maille vers le nœud précédent qui est toujours rebouclée (multisélecteur diagonal) dans le nœud N(3;2;2). Ce retour permettra de vérifier le bon fonctionnement de la maille empruntée. Dans ce cas, on a obtenu un itinéraire connectant le terminal demandeur T(1,1,2) au terminal destinataire T(4,2,2) connecté au nœud N(3,2,2). Ceci est représenté figure 7d. Si le nœud N(2;2;2) ne trouve pas de direction libre, il y a échec de connexion. Le nœud N(2;2;2) réémet alors vers le nœud précédent N(2;1;2) un mot dit de retour en arrière, c'est-à-dire de déconnexion partielle. Ce mot ne sera décodé que par le nœud N(2;1;2) et la maille (2;1;2;2;2) est alors déconcaténée. L'itinéraire se retrouve alors dans la position représentée figure 7a.

On peut, à ce niveau où la formation d'un itinéraire a été réalisée suivant l'invention, évoquer la libération d'une connexion et également la surveillance du réseau.

La libération d'une connexion est faite par le moyen d'un mot dit de libération émis par l'un des terminaux impliqués dans la connexion. Comme pour l'établissement, le terminal prenant l'initiative de libérer une connexion est appelé envoyeur, et son vis-à-vis, destinataire.

La fonction surveillance du réseau consiste elle, à surveiller les connexions établies. Cette surveillance est faite en «espionnant» les mots et en détectant le temps qui s'écoule entre le passage de deux mots successifs. Si par exemple, un terminal n'a pas reçu de mot dans les 0,1 ms, il pourra signaler une présomption de panne et celle-ci sera localisée par interrogation des nœuds jusqu'au terminal opposé. Si, par exemple, tous les nœuds et terminaux sont en état de fonctionnement, la panne sera située au niveau des appareils connectés aux terminaux.

Dans ce qui précède on a décrit comment s'établissait une connexion entre deux appareils reliés au réseau maillé modulaire suivant l'invention, connexion qui progresse d'un nœud du réseau à un autre, et qui a montré l'importance d'un nœud.

Dans ce qui suit on va décrire un nœud, à la fois dans sa structure matérielle et dans les fonctions multiples qu'il remplit, fonctions qui ont d'ailleurs été déjà signalées dans la partie précédente de la description.

On a vu qu'un nœud était autonome et donc qu'il doit comporter toute l'intelligence nécessaire à son fonctionnement propre, qui consiste à commuter les n voies bidirectionnelles qui lui sont connectées, huit dans l'exemple de réalisation choisi, et à connaître localement l'état du réseau.

Un nœud comprend à chaque entrée-sortie ($E_0$, $S_0$;$E_5$,$S_5$) un module de traitement, c'est-à-dire huit modules E/S0 à E/S7 comme cela est représenté schématiquement figure 9, coopérant avec un seul module de gestion et de routage MGR. Toutefois cette fonction de routage peut être répartie dans chaque module de traitement et donc le module de gestion peut ne pas être unique. Tous les modules de traitement sont identiques et comportent une partie opérateur pilotée par un automate. Pour effectuer le routage, il est nécessaire de connaître l'état du nœud, c'est-à-dire l'état de ses entrées-sorties. Chaque module E/S comporte ainsi un circuit (13), par exemple une bascule qui définit son état, de liberté ou de non-liberté. Cette bascule ne peut être commandée que par le module associé. Cependant l'état de cette bascule pourra être connu par tous les autres modules. Les modules E/S d'un nœud sont liés les uns aux autres par deux types de liaisons, les liaisons assurant le transport de l'information circulant dans le réseau de la partie entrée d'un module vers la partie sortie d'un autre module et les liaisons permettant aux différents modules E/Si et module de gestion MGR de dialoguer entre eux lors de la recherche d'un itinéraire par un nœud.

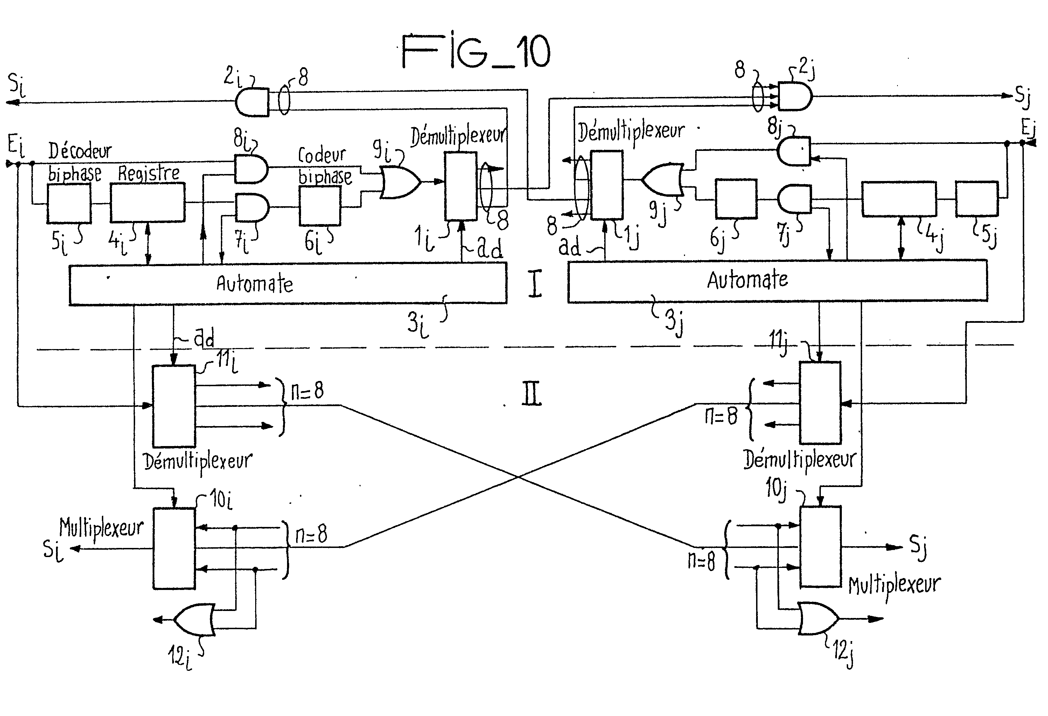

La figure 10 montre comment les modules sont reliés entre eux, étant entendu qu'à un instant donné, un module n'est en liaison qu'avec un seul autre module. La partie supérieure I de la figure 10 est relative à la liaison assurant le transport des informations tandis que la partie inférieure II est relative à la liaison du second type assurant le dialogue entre deux modules ou entre un module et le module de gestion.

On admettra, à titre d'exemple que pour les liaisons du premier type les informations qui y circulent sont toujours codées en biphase. Dans ces conditions, un module d'entrée Ei est connecté à un module de sortie Sj par l'intermédiaire d'un décodeur li, en fait un démultiplexeur comportant une entrée et 8 sorties, chacune étant connectée au module de sortie correspondant Sj par exemple, à travers un circuit «ET» 2j comportant 8 entrées. Pour que la connexion Ei Sj puisse être réalisée, les sorties du décodeur li qui ne sont pas choisies sont au 1 logique. Ce montage est symétrique, de sorte que le module d'entrée Ej est connecté au module de sortie Si par l'intermédiaire d'un démultiplexeur Ij et d'un circuit «ET» 2i. On notera que les décodeurs sont adressés par la connexion ad. Chacun des modules i, j est piloté par un automate 3i–3j.

On a vu que pour pouvoir effectuer les connexions et les déconnexions, chaque module E/S doit être capable d'«espionner» les mots qui les traversent. Cette fonction est remplie par un registre 4i monté en parallèle sur la liaison par laquelle transitent les mots, registre qui est chargé par eux. Ce registre est inséré dans l'exemple traité entre un décodeur biphase 5i et un codeur biphase 6i. Le décodeur 5i permet de mettre le mot dans un format tel qu'il peut être enregistré dans le registre connecté à l'automate 3i et le codeur 6i permet de recoder le mot dans son format d'origine s'il faut le transmettre. Cette transmission est réalisée à travers un circuit «ET» 7i dont une entrée est connectée à l'automate. Le circuit 8i, également commandé par l'automate, permet la transmission directe du mot sans qu'il soit «espionné». Le circuit «OU» 9i connecte alors l'entrée Ei au démultiplexeur Ii.

Une architecture analogue à celle qui vient d'être décrite est réalisée pour le module j.

En ce qui concerne les liaisons du deuxième type, c'est-à-dire celles qui permettent le dialogue entre les modules E/S et le module gestion MGR, on notera qu'elles sont également de deux types, liaisons entre les modules et liaison entre chaque module et le module de gestion. On notera également qu'aucune information de données ne passe dans ces liaisons. Les modules E/S étant tous identiques, leur connexion se fait de la façon la plus simple possible à travers un multiplexeur 10i, chaque module étant relié aux sept autres par une liaison unidirectionnelle. Cette façon de faire permet le dialogue en toute indépendance entre deux modules E/S quelconques et dans un nœud à un instant donné, deux modules E/S seulement peuvent communiquer entre eux, c'est-à-dire le module qui a reçu un message et le module vers lequel il le transmettra. La figure 10 dans sa partie II montre également comment ces liaisons entre deux modules d'un nœud sont réalisées. Chaque module i ou module j comporte ainsi comme cela a été vu, un multiplexeur 10i, 10j avec 8 entrées et une sortie et un circuit «OU» 12i, 12j connecté entre les entrées du multiplexeur permettant de savoir si un signal a été envoyé; chaque module comporte également un démultiplexeur 11i–11j avec une entrée et huit sorties, chaque sortie moins une étant reliée aux autres modules du nœud.

On notera que la fonction connaissance d'un signal envoyé sur les entrées d'un multiplexeur peut être réalisée à titre d'exemple également par un encodeur dit de priorité qui possède en l'occurence huit entrées, et indique le rang de l'entrée sélectionnée qui a la priorité la plus élevée.

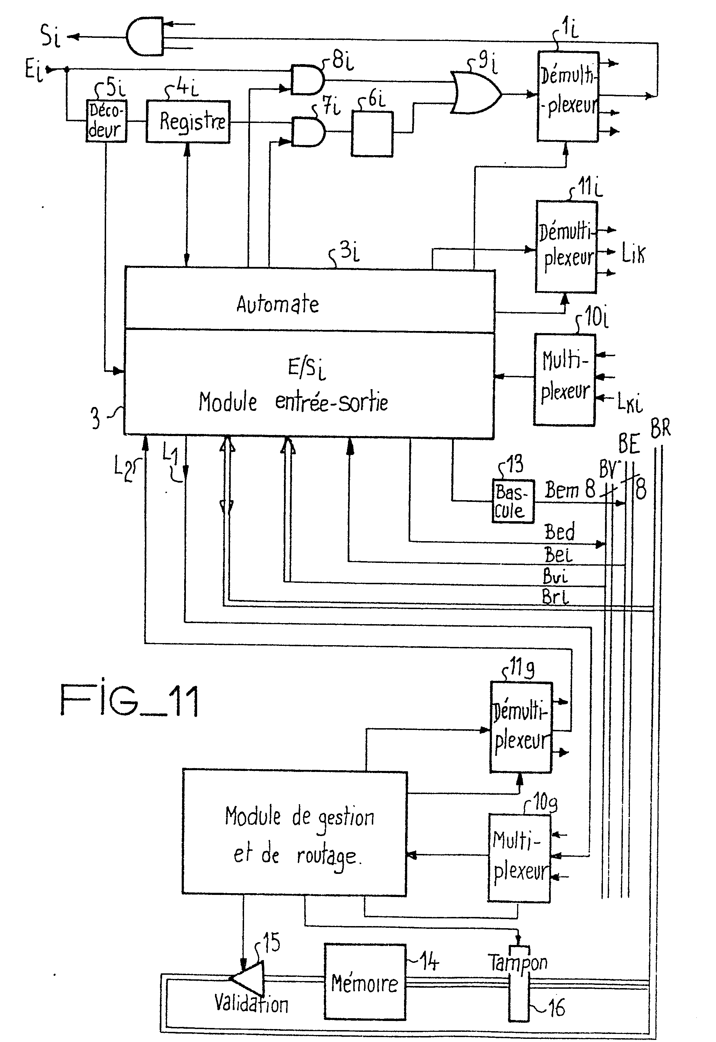

La figure 11 représente sous une forme schématique l'organisation des liaisons entre un module E/S et le module de gestion MGR. Ces liaisons sont d'une autre nature que celles décrites jusqu'à présent. De fait, comme cela a été déjà dit, les fonctions du module de gestion sont de gérer les accès aux données d'état du nœud et d'effectuer le routage; les demandes de connexion sont en règle générale traitées les unes après les autres dans l'ordre d'arrivée des demandes. Pour faire les demandes et en recevoir les réponses chaque module E/Si qui comprend un automate, repéré par 3i sur la figure, possède une double liaison L1, L2 vers le module de gestion MGR. Ces liaisons L1 et L2 sont connectées au module de gestion à travers un multiplexeur 10g et un démultiplexeur 11g, exactement comme les connexions à d'autres modules. De fait, le module de gestion et de routage MGR possède un module du type E/Si pour recevoir les demandes et y répondre. Le numéro des lignes affectées au module de routage est alors celui du module dans le nœud. Ces liaisons ne servent toutefois qu'à mettre en relation, c'est-à-dire à synchroniser les deux modules, le module E/Si appelant et le module de gestion; elles ne transmettent pas les informations utiles qui sont l'adresse du destinataire et le résultat du routage. Celles-ci sont transmises par le bus de routage Bri qui se connecte au bus BR connectant le module de gestion aux huit modules E/S du nœud considéré. D'autres liaisons telles que Bvi connecte le module E/Si au bus de validité de l'état du nœud par le bus BV, Bei qui connecte le module E/Si au bus d'état du nœud BE, la demande d'état du nœud auquel le module E/Si veut se raccorder étant faite par la liaison BEd. L'état du module E/Si interrogateur est transmis au module de gestion par la liaison Bem à travers une bascule 13, connectée au bus d'état du nœud BE. Il est évident que tous les bus dont il a été question sont connectés à tous les modules, soit 8 du nœud. Sur la figure 11, on notera également la présence d'une mémoire PROM 14 connectée au bus de routage BR par un circuit tampon 16 et au module de gestion, du côté calcul du routage par un circuit de validation 15.

Dans ce qui suit on va déterminer quelles sont les informations qui doivent être échangées entre un module E/Si et le module de gestion après que l'on ait délimité la tâche du module de gestion dans le routage.

Suivant l'invention plusieurs solutions peuvent être envisagées.

La première consiste à faire réaliser le routage entièrement par le module central (figure 9). Celui-ci fournit au module E/Si demandeur le numéro du module optimum de sortie du nœud. Cette solution simplifie les échanges entre les modules E/S et le module central mais bloque les autres demandes de connexion tant que la première n'est pas établie: en effet, le module E/S demandeur ne doit libérer le module de gestion que lorsqu'il est sûr qu'il ne pourra y avoir de retour en arrière, or, il ne peut en être sûr que lorsque la connexion est établie.

Une deuxième solution est d'essayer de libérer le module de routage le plus rapidement possible. Dans ce cas, le routage n'est pas effectué complètement dans le module central. Celui-ci ne fournit au module demandeur que la liste des modules classés dans l'ordre de préférence.

Le module de routage fournira alors 4 × 3 bits si on se restreint au ½ espace positif pour la progression du routage, ou 8 × 3 bits sinon. Les modules seront alors interconnectés par un bus BR de 12 ou 24 bits dont au moins 12 seront bidirectionnels; ils serviront en effet à envoyer l'adresse du terminal destinataire au module de gestion.

Une troisième solution est envisagée dans le cas où le module de gestion est saturé par les demandes de connexion. Suivant cette troisième solution chaque module E/S possède la capacité d'effectuer l'algorithme de routage et dans ces conditions il n'y a alors plus de module central.

Cette solution apporte un meilleur temps de réponse car plusieurs routages pouvant être effectués pratiquement en parallèle. Un autre avantage est la diminution importante des connexions, car il n'y a plus de module central, donc plus de bus de routage.

La fonction du module de routage apparaît fondamentale dans le réseau, puisque c'est sur cet élément que repose l'établissement d'un chemin de proche en proche et optimum, chemin qui doit être le plus rapide et le plus petit possible. Ces deux facteurs sont d'autant plus importants qu'ils interviennent dans le choix entre les deux premières solutions présentées plus haut.

La fonction de ce module de routage est d'effectuer l'algorithme qui a été présenté précédemment.

Suivant l'invention, on associe au module de routage visible figure 11 et référencé MGR, une mémoire PROM 14 dans laquelle on a emmagasiné tous les routages qui ont été calculés au préalable. Cette mémoire dans le cas d'un réseau 16 × 16 × 16, pour lequel chaque nœud ou terminal est repéré par trois composantes de 4 bits, soit 12 bits, aura une capacité de 4k mots. Pour un réseau de 8 × 8 × 8, des PROM de 512 mots suffisent.

Le routage s'effectue de la manière suivante, en se reportant à la figure 11. Par la liaison Bri connectée au bus de routage BR, le module E/Si envoie au module de routage l'adresse du terminal destinataire, qui servira à adresser la PROM.

Connaissant sur quel nœud se situe le terminal destinataire, le module de routage, par l'intermédiaire de la PROM, fournit alors les sorties classées dans l'ordre (4 sorties si on se limite au ½ espace positif, 8 sinon).

Les 8 sorties de la mémoire PROM 14 sont classées dans l'ordre qui est fourni par l'algorithme de routage, une sortie étant considérée meilleure qu'une autre si le chemin qu'il reste à parcourir en prenant cette sortie, est théoriquement plus court que par l'autre sortie. Il y a 8 sorties possibles sur un nœud, donc chaque sortie sera codée sur 3 bits.

Lorsqu'il a obtenu la liste des sorties, résultat de la demande de routage qu'il a faite par la liaison L1, le module E/Si concerné doit connaître l'état des autres modules de la liste. Il doit pour cela tester les bascules 13 indiquant l'état de chaque module. Par contre il n'agit pas sur ces bascules, dont la modification d'état sera faite par le module associé lorsque celui-ci aura reçu une demande du module initial.

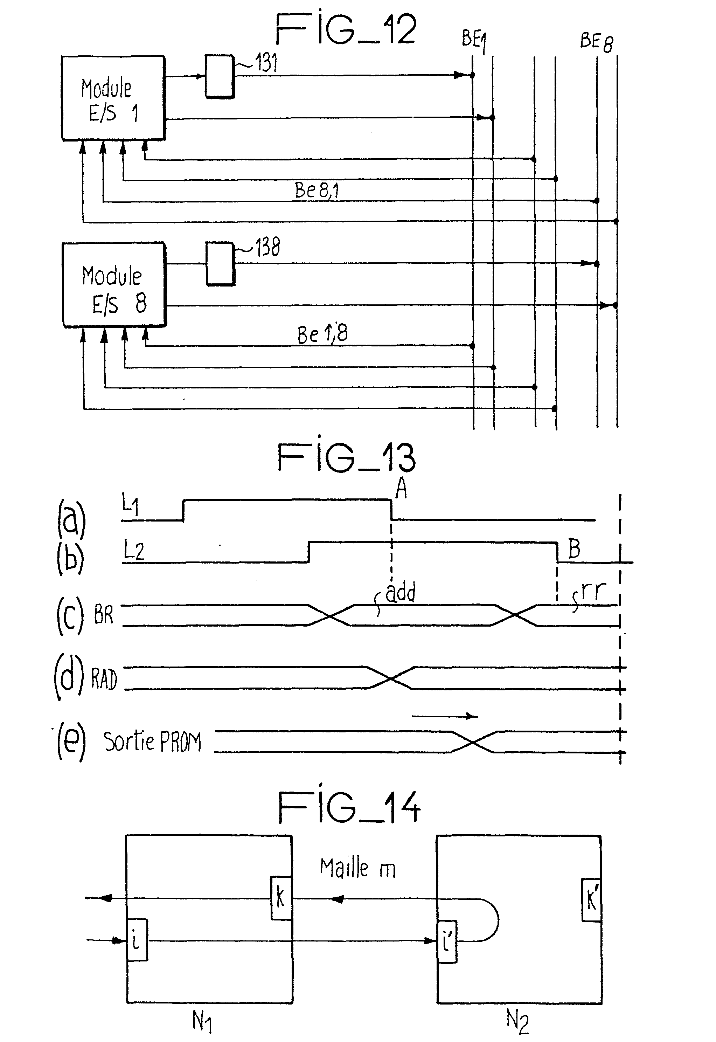

La figure 12 donne le détail de l'architecture correspondant à ce type de service: une bascule 13i est associée à chaque module E/Si qui est connectée à un bus BE, dit d'état du nœud accessible pour tous les modules.

Sur la figure 12 on a ainsi représenté le module 1, soit E/S1 et le module 8, soit E/S8 du nœud considéré, avec chacun sa bascule d'état 131 et 138. La bascule 131 est connectée au fil BE1 du Bus BE qui transmet l'état du module E/S1 aux autres modules, par exemple le module E/S8 par la liaison Bel, 8. De même la bascule 138 est connectée au fil Be8 du bus BE qui transmet l'état du module E/S8 aux autres modules, par exemple le module E/S1 par la liaison Be8, 1.

Pour mieux faire comprendre le fonctionnement du réseau on définit les états possibles d'un module E/Si. Un module E/Si est dit libre s'il ne fait partie d'aucune connexion et s'il n'a reçu aucune demande de connexion, ni d'autre nœud, ni d'un autre module E/S du même nœud.

Il est occupé s'il fait partie d'une connexion établie ou en cours d'établissement.

Il est activé ou mobilisé s'il vient de recevoir un mot de connexion du nœud précédent.

Il est sollicité si un module E/S du même nœud, ayant reçu un mot de connexion, le sollicite pour faire partie d'une connexion.

On suppose alors que le module E/Si considéré (figure 11) reçoit un mot de connexion et qu'il est libre; la liaison est donc rebouclée dans le module i et le mot de connexion est alors simultanément réémis sur la liaison sortante du module i, soit Si décodé (en binaire normal) et stocké dans le registre 4i. Le bloc automate 3i du module i décode le champ 1 du mot de connexion (figure 2) qui lui indique que le mot reçu est un mot du réseau. Dans le cas contraire, il nettoie le registre et attend le prochain mot.

Le bloc automate décode ensuite le deuxième champ c'est-à-dire la partie CO du mot qui indique la signification du mot reçu: si c'est un mot de connexion, il entame la procédure de connexion et la figure 13 indique comment s'opère le traitement d'une demande de connexion par un module. Le module étant activé, sa bascule 13i d'état est mise à 1. Il mémorise aussi l'adresse du nœud précédent et il envoie alors au module de routage une demande de routage par la ligne L1 (courbe 13a); il attend ensuite la réponse du module de routage sur la ligne L2 (courbe 13b).

Dès que la réponse arrive, la ligne L2 transmettant un I logique, le module i émet sur le bus de routage Bri l'adresse du terminal destinataire (champ ADT) (courbe 13c) et remet la ligne L1 à 0 (point A). L'adresse du terminal destinataire est stockée dans le registre adresse Rad du module de routage qui n'est pas indiqué sur les figures 10 et 11 (courbe 13d). Cette adresse est validée par le front de descente de L1 (point A).

Après écoulement du temps d'accès de la PROM, la sortie de la PROM est validée (courbe 13e), le module de gestion envoie le résultat du routage sur le bus BR et remet L2 à 0 (point B). C'est le front de descente de L2 qui valide le résultat au niveau du module i. Le module de gestion passe ensuite à une autre demande.

Suivant l'exemple choisi, le temps nécessaire au routage une fois la demande prise en compte est de l'ordre de 500 à 600 ns. A cet instant, le module i possède dans un registre la liste des modules de sortie dans l'ordre du plus court chemin. Il teste alors les bascules 13i d'état des modules dans l'ordre fourni. Si on suppose qu'un module de la liste fournie est libre, et que LiK est l'indice de ce module, le module i envoie un signal sur la ligne Lki. Dès que le module k lit ce signal, il répond sur la ligne (figure 11) et met la bascule d'état (13i) à I. Il est alors dans l'état sollicité. Dans le cas où un autre module j aurait simultanément sollicité le module k et si ce module k répond au module i, le module j doit abandonner sa sollicitation dès qu'il s'aperçoit que la ligne d'état du module k est passée à l'état logique I.

Dès qu'il est sollicité, le module k ne doit plus réagir aux mots de connexion arrivant sur son entrée. Cependant, afin que le nœud qui avait émis le message sache que la connexion ne se fera pas et afin qu'il abandonne la demande de connexion, le module k réémet vers le nœud adjacent, un mot de déconnexion partielle MDP (figure 2). Cette méthode permet au nœud qui a émis le message de connexion de savoir que la connexion n'a pas été abandonnée pour cause de panne.

Dès la réponse du module k au module i, les modules commutent alors vers les sorties du module associé: module i vers la sortie du module k et réciproquement, la maille est concaténée.

Le module i prépare le nouveau message de connexion, en chargeant dans le champ 4 soit ADD l'adresse du nœud sur lequel il se trouve, c'est en effet le dernier nœud atteint à cet instant.

Lorsque le message est prêt, le module i émet le message vers le nœud suivant et le processus recommence.

Il existe des mots de déconnexion partielle qui commandent une déconnexion partielle dans les cas suivants qui seront mieux compris si l'on se reporte à la figure 14 qui montre comment le module i d'un nœud N1 a sollicité un module i' d'un nœud adjacent N2. Sur le schéma de la figure 14 on a indiqué une maille m et un module k du nœud N1.

La nouvelle maille m concaténée peut être abandonnée pour plusieurs raisons et à plusieurs niveaux:

– le module i' peut être en panne,
– le module i' peut être dans l'état sollicité,
– le module i' ne trouve pas de voie libre.

La décision de déconnexion partielle peut être prise à deux niveaux:

– dans le module i' s'il est dans l'état sollicité ou s'il ne trouve pas de voie libre: le module i' réémet alors un message de déconnexion partielle vers le module k,

– dans le module k, si le module i′ est en panne,

– la réception d'un mot lorsque le module i′ est dans l'état sollicité, provoque une interruption, le module i′ commence alors le traitement usuel du mot,

– si c'est un mot de déconnexion, il nettoie le registre 4 (figures 10–11) et reprend le traitement de la sollicitation,

– si c'est un mot de connexion et si l'adresse du dernier nœud atteint est différente du nœud sur lequel il se trouve, il remplace le code «connexion» par le code de «déconnexion partielle» dans le champ 2, CO. Il réémet ensuite le message vers le module k. De même, si le module i′ ne trouve pas de sortie libre fonctionnant, il forme un message de déconnexion partielle et il émet ce message vers le module k. Au niveau du module k la déconnexion partielle se produit de la façon suivante:

– premier cas: le module i′ est en panne ou la maille est coupée. A l'instant de la concaténation de la maille, c'est-à-dire de la commutation de i vers la sortie k et de k vers la sortie i, le module k déclenche une horloge pendant un laps de temps Ta. S'il n'a pas reçu le message de connexion émis par i pendant le temps Ta, il conclut que i′ est en panne ou que la maille est coupée, le module k décide alors l'abandon de la liaison.

– deuxième cas: la maille fonctionne et le module i′ reçoit le mot de connexion venant de i. On se trouve dans le cas où un module sollicité reçoit un mot de connexion, mais dans ce cas l'adresse du dernier nœud atteint (champ 4) est la même que celle du nœud. Le module ne fait donc rien.

Si pour une des raisons précédentes, le module i′ réémet un mot de déconnexion partielle, ce mot sera reçu par le module k mais aussi par tous les modules de l'itinéraire déjà créé. C'est pourquoi ici encore, le module recevant un mot doit, après décodage des champs 1 et 2, comparer l'adresse du champ 4 avec l'adresse du nœud sur lequel il se trouve. Si les adresses coïncident, le message concerne bien le module, sinon le registre 4 est nettoyé. Pour signaler la déconnexion au module i le module k remet la ligne Lki à 0, et il attend la réponse. Le module i répond en mettant la ligne Lik à 0. Les deux modules se rebouclent alors. Le module i recommence alors la procédure de recherche d'une sortie.

A ce niveau deux procédures sont possibles:

– ou bien, il continue à parcourir la liste à partir de la sortie précédemment essayée: on abandonne alors les sorties mieux classées qui auraient pu se libérer,

– ou bien, on reprend la liste au début en ne testant que les sorties qui n'ont pas déjà été essayées. Il faut pour cela un registre de marquage des sorties. Ce registre est remis à zéro à chaque déconnexion totale.

Lorsqu'une communication ou une transmission entre deux terminaux est achevée, il faut libérer la liaison; on procède à une déconnexion totale. Celle-ci ne peut être demandée que par un des terminaux de la connexion.

Pour cela, le terminal qui désire la libération envoie un message de déconnexion sur la ligne ou mot de libération ML. Ce message est stocké dans tous les modules concernés, et reçu par le terminal opposé. Celui-ci doit réémettre vers le terminal envoyeur un mot indiquant qu'il accepte la déconnexion. Cette décision peut être prise par le terminal récepteur soit après interrogation des appareils concernés par cette liaison, s'ils sont «intelligents», soit par décision propre dans les autres cas.

Dès la réception de l'accord de déconnexion par le terminal envoyeur, si l'ordre de déconnexion est toujours valable, il envoie sur la ligne un mot de confirmation de déconnexion.

De même que précédemment, les modules préalablement concernés reçoivent et décodent ces mots. Les modules ayant été placés dans l'attente de «confirmation de déconnexion», ils se déconnectent un temps Te de l'ordre par exemple de 1 us après le décodage du mot de confirmation. La longueur maximum de la liaison étant de l'ordre par exemple de 300 m, le dernier bit du message aura ainsi nécessairement été reçu par le module suivant.

Cette connexion donnée à titre d'exemple présente les avantages suivants:

– les deux terminaux de la liaison acceptent la déconnexion,

– il y a moins de risques de déconnexion involontaire du fait du message d'accord provenant du terminal récepteur, prouvant que le premier message de déconnexion a parcouru toute la liaison.

Dans la description précédente, la détermination de la fonction routage, primordiale suivant l'invention pour permettre l'établissement d'une connexion entre deux entités, à travers le réseau maillé, est faite dans un module centralisé, auquel tous les modules du nœud considéré sont reliés. Dans certains cas, lorsque le réseau n'est pas trop important, la fonction de routage peut avantageusement être distribuée au niveau de chaque module entrée-sortie E/Si. Dans ces conditions, chaque module comporte, dans sa partie automate, les éléments lui permettant d'effectuer le routage.

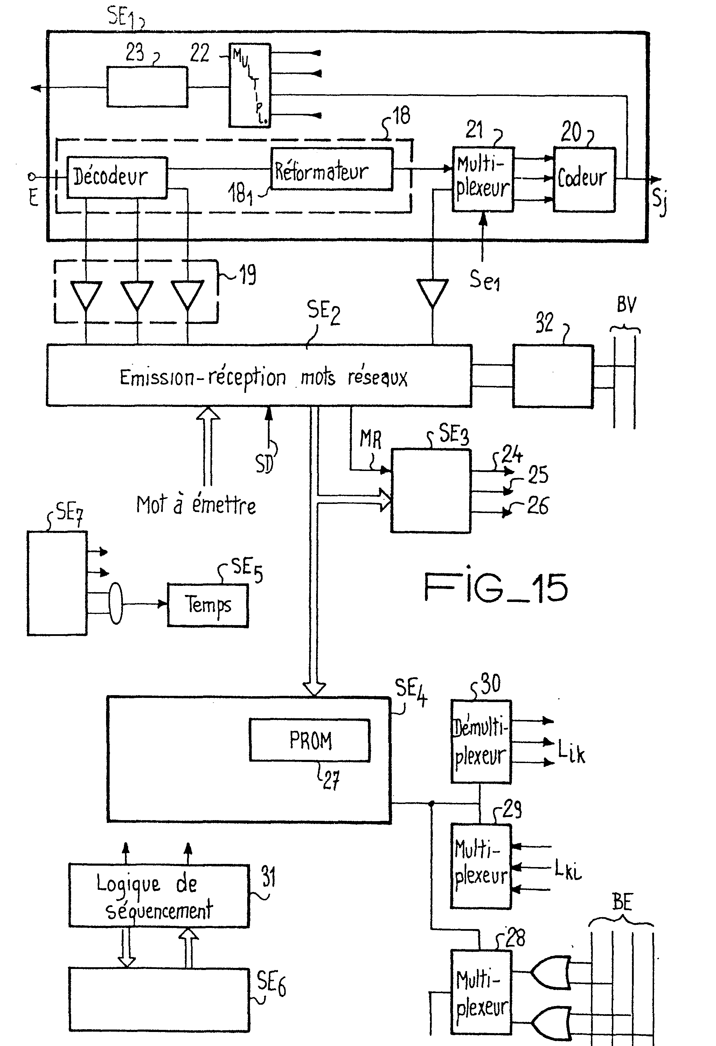

La figure 15 présente un schéma de type fonctionnel d'un module capable de remplir la fonction routage.

Un tel module comprend différentes parties qui sont appelées pour la commodité de la description des sous-modules. Un premier sous-module SE1 traite le transport et la réception des mots d'information et n'est pas très différent de la partie similaire qui a été décrite à l'appui de la figure 10. Il comprend à partir de son entrée E où sont appliquées les informations à transmettre, un circuit décodeur-réformateur 18 qui à travers des circuits 19 est connecté à un deuxième sous-module SE2 assurant l'interface entre le sous-module SE1 et un sous-module SE4, appelé sous-module de séquencement. Le sous-module SE1 comprend également un circuit codeur 20 connecté au sous-module SE2. La présence de ces circuits dècodeur et codeur est due au fait que les informations comme on l'a déjà mentionné sont codées en biphase qu'il faut décoder d'une part et «reformer» car on ne peut réémettre directement du biphase. Le codeur ensuite retransforme les mots qu'il faut transmettre en biphase. Un multiplexeur 21 est intercalé entre le sous-module SE2 et le codeur 20. Ce multiplexeur est également connecté à la sortie du réformateur 181, dans le cas où l'information est retransmise directement sans être contrôlée dans le sous-module SE2. La sortie du codeur 20 est connectée d'une part au module d'entrée du nœud adjacent qui aura été choisi, par la connexion S1 et d'autre part à la sortie du module considéré Si à travers un multiplexeur 22 ayant autant d'entrées que de modules dans un nœud et une sortie connectée au circuit 23. Le multiplexeur 21 est contrôlé par l'information Sel.

Le sous module SE2 sert d'interface entre le sous-module d'émission-réception SE1 et un sous-module dit de séquencement SE6 contrôlant le fonctionnement du module considéré et comprenant une logique de séquencement 31.

Ce sous-module SE2 «reconnaît» les mots réseaux traversant le module considéré et autorise leur ré-émission vers le codeur 20 à travers le multiplexeur 21, après que leur validité ait été contrôlée, par l'intermédiaire du circuit 32 connecté au bus de validité BV.

En ce qui concerne l'émission, le sous-module SE2 doit sur la commande SD provenant de la logique de séquencement 31 du sous-module de séquencement SE6, pouvoir émettre en série vers le sous-module SE1, un mot réseau MR qui lui aura été présenté en parallèle.

Le module considéré comprend un troisième sous-module SE3 connecté au sous-module SE2; sa fonction est de décoder les mots réseaux, faisant apparaître les différentes possibilités déjà évoquées précédemment, suivant qu'il s'agit d'un mot de connexion apparaissant sur la sortie 24, un mot de libération partielle apparaissant sur la sortie 25, un mot de déconnexion apparaissant sur la sortie 26.

Un quatrième sous-module SE4, connecté, au sous-module SE1 d'émission et de réception des mots réseaux, assure la fonction de réalisation du routage. Il comprend la logique permettant d'exploiter les résultats d'une mémoire PROM 27 qu'il comporte. Cette mémoire PROM fonctionne de la manière décrite précédemment dans le cas où la fonction routage était centralisée au niveau du nœud, mais elle est d'une capacité moindre.

Le sous-module de routage SE4 reçoit, tout comme le module MGR centralisé, certaines informations comme l'état du nœud par le bus BE et le multiplexeur 28.

Il est connecté également à un multiplexeur 29 par lequel est acheminée la demande de routage et à un démultiplexeur 30 par lequel est acheminé la réponse de la demande de routage. Par les connexions Lik et Lki s'établit alors le dialogue entre le module demandeur et le module désigné.

Un sous-module SE5 réalise toutes les mesures de temps nécessaires; il est généralement constitué de préférence par des compteurs. Enfin un sous-module SE7 est constitué par une horloge.

On a ainsi décrit un réseau maillé modulaire de communications.

### Revendications

1. Réseau maillé modulaire de communications, pour l'établissement de communications entre des appareils susceptibles d'émettre ou de recevoir des informations, ledit réseau comportant des nœuds de connexion et des conduits de transmission d'informations reliant les nœuds entre eux, les appareils étant reliés à des terminaux, eux-mêmes reliés aux nœuds et chaque nœud (N) étant connecté à un nombre défini d'autres nœuds par des conduits; ledit réseau étant caractérisé par le fait que chaque nœud comprend un mombre égal de lignes entrantes (LE) et sortantes (LS), des moyens assurant une commutation simultanée et indépendante, et des moyens lui donnant connaissance de l'état d'occupation et/ou de liberté des nœuds adjacents auxquels il est relié, et que chaque nœud (N) et chaque terminal (T) comporte des moyens logiques leur permettant de trouver un chemin qui soit libre vers un nœud adjacent, cette opération étant répétée de proche en proche d'un nœud au suivant jusqu'à ce qu'une connexion soit établie entre deux terminaux reliés respectivement aux appareils à connecter.

2. Réseau maillé modulaire suivant la revendication 1, caractérisé par le fait que l'établissement d'une connexion entre deux appareils à travers le réseau se fait en deux temps: recherche et établissement de la connexion proprement dite pendant un premier temps, transmission des données entre les appareils, à travers ladite connexion pendant un second temps, ladite connexion étant maintenue jusqu'à l'émission par un des terminaux, d'une information dite mot de déconnexion.

3. Réseau maillé suivant la revendication 1, caractérisé par le fait que chaque nœud ou terminal comporte des moyens lui permettant d'exécuter un algorithme dit de routage, à partir du mot de connexion (MC) qu'il a reçu comportant toujours l'adresse de l'entité qui émet ledit mot de connexion, appareil, terminal demandeur, ou nœud intermédiaire, et l'adresse (ATD) du terminal destinataire, ledit algorithme déterminant le choix d'une maille libre rapprochant le nœud considéré du terminal destinataire.

4. Réseau maillé suivant la revendication 2, caractérisé par le fait qu'il comporte, pour chaque couple ligne entrante-ligne sortante (LE–LS), un module (E/Si) comportant un opérateur piloté par un automate (3), chaque module coopérant, pour l'établissement de l'algorithme de routage avec un module centralisé dit de gestion et de routage (MGR) auquel il est relié par des liaisons particulières (L1–L2) assurant un dialogue entre chaque module (E/Si) et le module gestion et de routage (MGR) et entre les modules, chaque module comportant en plus un circuit (13i) donnant son état d'occupation ou de liberté qu'il transmet aux autres modules et au module de gestion et de routage.

5. Réseau maillé suivant la revendication 4, caractérisé par le fait que la liaison connectant un module d'entrée (Ei) d'un nœud à un module de sortie (Si) du même nœud, destinée à assurer le transport des informations quand une connexion a été établie entre ces modules, comprend un démultiplexeur (1i) ayant une entrée et un nombre de sorties égal au nombre de modules d'un nœud, et un circuit «ET» (2j) connectant une sortie du démultiplexeur au module de sortie (Sj) considéré, une sortie du démultiplexeur du module d'entrée (Ei) étant connectée directement au module de sortie (Si) de même rang à travers un circuit «ET» (2i), le démultiplexeur étant de plus connecté à l'automate (3i) du module d'entrée-sortie (E/Si) considéré qui lui transmet l'adresse du terminal destinataire.

6. Réseau maillé suivant la revendication 5, caractérisé par le fait que la liaison affectée au transport des informations entre un module de rang i et un module de rang j comprend une liaison de surveillance de la connexion, montée en parallèle sur la liaison d'entrée du démultiplexeur (1i) du module d'entrée i, cette liaison de surveillance comprenant à partir de l'entrée (Ei) du module i, un registre (4i) contrôlé par l'automate (3i) du module, et recevant les mots d'information transmis par la connexion établie entre deux entités du réseau, la sortie dudit registre étant connectée à l'entrée du démultiplexeur (1i) à travers un circuit «ET» (7i) connecté à «L'automate (3i) et un circuit «OU» (9i)».

7. Réseau maillé suivant la revendication 6, caractérisé par le fait que le registre (4i) est inséré entre un circuit décodeur biphase (5i) et un circuit codeur biphase (6i).

8. Réseau maillé suivant la revendication 2, caractérisé par le fait que le dialogue entre deux nœuds (i–j), d'un nœud ou d'un module (i) avec le module de gestion et de routage (MGR) du nœud, s'établit à travers une liaison comportant un démultiplexeur (11i–11j) dont l'entrée est connectée à l'entrée (Ei–Ej) du module d'entrée considéré, et les sorties en nombre égal du nombre de modules d'entrée-sortie d'un nœud, à un multiplexeur (10j–10i) de module de sortie (j) auquel le module d'entrée est connecté, le démultiplexeur (11i–11j) et le multiplexeur (10i–10j) considérés étant contrôlés par l'automate (3i–3j) du module considéré transmettant l'adresse du terminal destinataire.

9. Réseau maillé suivant la revendication 3, caractérisé par le fait que la liaison entre un module i et le module de gestion et de routage (MGR) se fait par une première ligne (L1) transmettant une demande de routage, connectée au module de gestion (MGR) par un multiplexeur (10g) ayant autant d'entrées qu'il y a de modules dans un nœud et une sortie vers le module de gestion et une seconde ligne (L2) transmettant la réponse du module de gestion et de routage à travers un démultiplexeur (11g) ayant une entrée et un nombre de sorties égal au nombre des modules du nœud considéré, les liaisons entre un module et le module de gestion et de routage transmettant des informations utiles se faisant par des bus, un bus de routage (BR) transmettant au module de gestion et de routage l'adresse du terminal destinataire et recevant l'information de désignation du module de sortie du nœud, un bus (BV) transmettant la demande de l'information de validité de l'état du nœud futur, un bus (BEi) transmettant l'information d'état des nœuds adjacents et un bus (Bem) donnant à travers une bascule (13i) l'état du module demandeur (i).

10. Réseau maillé suivant la revendication 9, caractérisé par le fait que le module de gestion et de routage (MGR) comprend une mémoire PROM (14) contenant tous les routages possibles calculés à l'avance, connectée au bus de routage (BR) à travers un registre tampon (16), chargé par le module (MGR) et recevant du module demandeur, l'adresse (AD) du terminal destinataire par le bus de routage (BR), ladite mémoire (14) délivrant une liste classée des sorties disponibles dans le nœud, transmise au module demandeur par le bus de routage (BR) à travers un circuit de validation (15).

11. Réseau maillé suivant la revendication 4, dans lequel le nombre de nœuds est relativement faible, caractérisé par le fait que chaque module entrée-sortie (E/Si) comprend dans sa partie automate (3) les moyens lui permettant d'effectuer le routage.

12. Réseau maillé suivant la revendication 11, caractérisé par le fait que chaque module comprend un premier sous-module (SE1) réalisant le transport et la réception des mots d'information, un deuxième sous-module (SE2) réalisant l'interface entre la partie émission-réception du premier sous-module (SE1) et un sixième module (SE6) définissant le séquencement des opérations, un troisième sous-module (SE3) assurant le décodage des mots réseaux, un quatrième sous-module (SE4) comprenant une mémoire (27) et délivrant la meilleure sortie en fonction du contenu de la mémoire (27), et un cinquième sous-module (SE5) réalisant toutes les mesures de temps nécessaire, comprenant de préférence des compteurs alimentés par un septième sous-module (SE7) constitué par une horloge.

## Claims

1. Modular nodal communication network for establishing communications between apparatus units susceptible of transmitting or receiving information, said network comprising connection nodes and information transmission paths interconnecting the nodes, said apparatus units being connected to terminals which are in turn connected to the nodes, and each node (N) being connected to a determined number of other nodes through paths; said network being characterized by the fact that each node comprises an equal number of input lines (LE) and output lines (LS), means ensuring a simultaneous and independent communication and means providing the node with information on the busy state and/or availability of the adjacent nodes whereto it is connected, and in that each node (N) and each terminal (T) comprises logic means for finding an available path towards an adjacent node, this operation being repeated stepwise and node by node until a connection is established between two terminals respectively connected to the apparatus unit to be connected.

2. Modular nodal network according to claim 1, characterized by the fact that a connection between two apparatus units through the network is established in two times: searching and establishing the connection proper during a first time and transmission of data between the apparatus units through third connections during a second time, said connection being maintained until one of the terminals transmits an information termed disconnection word.

3. Nodal network according to claim 1, characterized by the fact that each node or terminal comprises means for executing a routing algorithm starting with a connection word (MC) received thereby and always comprising the address of the unit which transmits said connection word, apparatus, requesting terminal or intermediate node, and the address (ATD) of the desired terminal, said algorithm determining the choice of a free link approaching the considered node of the desired terminal.

4. Nodal network according to claim 2, characterized by the fact that it comprises, for each input line-output line pair (LE–LS), a module (E–Si) comprising an operator controlled by an automatic unit (3), each module, for establishing the routing algorithm, cooperating with a so-called supervising and routing module (MGR) whereto it is connected through particular connections (L1–L2) ensuring a dialogue between each module (E/Si) and the supervising and routing module (MGR) and between the modules, each module further comprising a circuit (13i) indicating its busy or availability state and transmitting it to the other modules and to the supervising and routing module.

5. Nodal network according to claim 4, characterized by the fact that the connection connecting an input module (Ei) of a node with an output module (Sj) of the same node, and susceptible of ensuring the information transfer when a connection has been established between these modules, comprises a demultiplexer (1i) having one input and a number of outputs equal to the number of modules of a node, and an AND circuit (2j) connecting one output of the demultiplexer to the considered output module (Sj), one output of the demultiplexer of the input module (Ei) being directly connected to the output module (Si) of same order through an AND circuit (2i), the demultiplexer being further connected to the automatic unit (3i) of the input-output module (E/Si) considered transmitting thereto the address of the desired terminal.

6. Nodal network according to claim 5, characterized by the fact that the connection allotted to the transfer of information between a module of order i and a module of order j comprises a connection monitoring line mounted in parallel on the input connection of the demultiplexer (1i) of the input module i, this monitoring line comprising, starting from the input (Ei) of the module i, a register (4i) controlled by the automatic unit (3i) of the module, and receiving the information words transmitted through the connection established between two units of the network, the output of said register being connected to the input of the demultiplexer (1i) through an AND circuit (7i) connected to the automatic unit (3i) and an OR circuit (9i).

7. Nodal network according to claim 6, characterized by the fact that the register (4i) is inserted between a biphase decoding circuit (5i) and a biphase coding circuit (6i).

8. Nodal network according to claim 2, characterized by the fact that the dialogue between two nodes (i–j), of a node or a module (i) with the supervising and routing module (MGR) of the node, is established through a connection comprising a demultiplexer (11i–11j) the input of which is connected to the input (Ei–Ej) of the considered input module, and the outputs the number of which is equal to the number of input-output modules of a node, to an output (j) module multiplexer (10j–10i) whereto the input module is connected, the considered demultiplexer (11i–11j) and multiplexer (10i–10j) being controlled by the automatic unit (3i–3j) of the considered module transmitting the address of the desired terminal.

9. Nodal network according to claim 3, characterized by the fact that the connection between a module i and the supervising and routing module (MGR) is made through a first line (L1) transmitting a routing instruction and connected to the supervising module (MGR) through a multiplexer (10g) having as many inputs as there are modules in a node and an output towards the supervising module, and a second line (L2) transmitting the response of the supervising and routing module through a demultiplexer (11g) having an input and a number of outputs equal to the number of modules of the considered node, the connections between a module and the supervising and routing module transmitting the useful information being provided by bus lines, a routing bus (BR) transmitting to the supervising and routing module the address of the desired terminal and receiving the indicating information from the output module of the node, a bus (BV) transmitting the request of validity information of the future node state, a bus (BEi) transmitting the status information on the adjacent nodes, and a bus (Bem) indicating by means of a bistable circuit (13i) the status of the requesting module (i).

10. Nodal network according to claim 9, characterized by the fact that the supervising and routing module (MGR) comprises a PROM memory (14) containing all of the possible routes which are previously calculated, connected to the routing bus (BR) through a buffer register (16) loaded by the module (MGR) and receiving from the requesting module the address (AD) of the desired terminal through the routing bus (BR), said memory (14) supplying a classified list of the available outputs in the node which is transmitted to the requesting module through the routing bus (BR) and through a validation circuit (15).

11. Nodal network according to claim 4, wherein the number of nodes is relatively small, characterized by the fact that each input-output module (E/Si) comprises in its automatic unit portion (3) means permitting the module to perform the routing.

12. Nodal network according to claim 11, characterized by the fact that each module comprises a first sub-module (SE1) performing the transfer and reception of the information words, a second sub-module (SE2) interfacing between the transmission-reception portion of the first sub-module (SE1), and a sixth module (SE6) defining the sequencing of the operations, a third sub-module (SE3) ensuring the decoding of the network words, a fourth sub-module (SE4) comprising a memory (27) and supplying the best output as a function of the content of the memory (27), and a fifth sub-module (SE5) performing all the required time measurements and preferably comprising counters fed by a seventh sub-module (SE7) formed by a clock.

**Patentansprüche**

1. Kommunikations-Knoten-Koppelfeld zum Herstellen von Nachrichtenübertragung zwischen zum Informationssenden und -empfangen fähigen Apparaten, wobei das Netzwerk Verbindungsknoten und Informationsübertragungsleitungen enthält, die die Knoten untereinander verbinden, wobei die Apparate an Endgeräte angeschlossen sind, die ihrerseits mit den Knoten verbunden sind, und jeder Knoten (N) durch Leitungen mit einer festgelegten Anzahl anderer Knoten verbunden ist; wobei das Netzwerk dadurch gekennzeichnet ist, dass jeder Knoten eine gleiche Anzahl von Eingangsleitungen (LE) und Ausgangsleitungen (LS), Mittel, die eine simultane und unabhängige Schaltung gewährleisten, und Mittel enthält, die ihn darüber unterrichten, ob die benachbarten Knoten, mit denen er verbunden ist, besetzt und/oder frei sind, und dadurch, dass jeder Knoten (N) und jedes Endgerät (T) logische Mittel enthält, die es ihnen erlauben, einen freien Weg zu einem benachbarten Knoten zu finden, wobei dieser Vorgang nacheinander von einem Knoten zum nächsten wiederholt wird, bis zwischen zwei Endgeräten eine Verbindung hergestellt ist, die jeweils mit den zu verbindenden Apparaten verbunden sind.

2. Knoten-Koppelfeld nach Anspruch 1, dadurch gekennzeichnet, dass die Herstellung einer Verbindung zwischen zwei Geräten über das Netzwerk in zwei Zeitabschnitten vor sich geht: Suchen und Herstellen der eigentlichen Verbindung während eines ersten Zeitabschnitts, Übertragen der Daten zwischen den Geräten durch diese Verbindung während eines zweiten Zeitabschnitts, wobei die Verbindung aufrechterhalten wird, bis eines der Endgeräte eine Information sendet, die mit Freischaltwort bezeichnet wird.

3. Knoten-Koppelfeld nach Anspruch 1, dadurch gekennzeichnet, dass jeder Knoten oder jedes Endgerät Mittel enthalten, die es ermöglichen, einen sogenannten Wegsteuerungs-Algorithmus von einem Verbindungswort (MC) ausgehend auszuführen, das von ihm empfangen wurde und das immer diese Adresse der Einheit, die das Verbindungswort sendet, d. h. Apparat, anforderndes Endgerät oder Zwischenknoten und die Adresse (ATD) des Zielendgeräts enthält, wobei der Algorithmus die Wahl einer freien Masche, die dem betreffenden Knoten des Zielendgeräts naheliegt, bestimmt.

4. Knoten-Koppelfeld nach Anspruch 2, dadurch gekennzeichnet, dass es für jedes Paar aus Eingangsleitung und Ausgangsleitung (LE–LS) einen Modul (E/Si) mit einem von einem Automaten (3) gesteuerten Operator enthält, wobei jeder Modul zur Herstellung des Wegsteuerungs-Algorithmus mit einem Lenkungs- und Wegsteuerungs-Modul (MGR) genannten Zentralmodul zusammenwirkt, mit dem es über spezielle Leitungen (L1–L2) verbunden ist, die den Dialog zwischen jedem Modul (E/Si) und dem Lenkungs- und Wegsteuerungs-Modul (MGR) und zwischen den Moduln gewährleisten, wobei jeder Modul weiterhin eine Schaltung (13i) enthält, die seinen Zustand der Besetztheit oder der Freiheit ausgibt und ihn den anderen Moduln und dem Lenkungs- und Wegsteuerungs-Modul übermittelt.

5. Knoten-Koppelfeld nach Anspruch 4, dadurch gekennzeichnet, dass die Leitung, die ein Eingangsmodul (Ei) eines Knotens mit einem Ausgangsmodul (Sj) desselben Knotens verbindet und dazu dient, den Informationstransport zu gewährleisten, wenn eine Verbindung zwischen diesen Moduln hergestellt worden ist, einen Demultiplexer (1i) mit einem Eingang und einer Anzahl von Ausgängen, die gleich der Anzahl der Moduln eines Knotens ist, und eine UND-Schaltung (2j) enthält, die einen Ausgang des Demultiplexers mit dem betreffenden Ausgangsmodul (Sj) verbindet, wobei ein Ausgang des Demultiplexers des Eingangsmoduls (Ei) direkt mit dem Ausgangsmodul (Si) derselben Stufe über eine UND-Schaltung (2i) verbunden ist, wobei der Demultiplexer weiterhin mit dem Automaten (3i) des betreffenden Eingangs-Ausgangsmoduls (E/Si) verbunden ist, der ihm die Adresse des Zielendgeräts übermittelt.

6. Knoten-Koppelfeld nach Anspruch 5, dadurch gekennzeichnet, dass die dem Informationstransport zwischen einem Modul der Stufe i und einem Modul der Stufe j zugeordnete Leitung eine Verbindungsüberwachungsleitung enthält, die parallel zur Eingangsleitung des Demultiplexers (1i) des Eingangsmoduls i geschaltet ist, wobei die Überwachungsleitung, vom Eingang (Ei) des Moduls i ausgehend, ein vom Automaten (3i) des Moduls gesteuertes Register (4i) enthält und die Informationswörter, die über die zwischen den beiden Netzwerkeinheiten hergestellte Verbindung übertragen werden, erhält, wobei der Ausgang des Registers über eine an den Automat (3i) angeschlossene UND-Schaltung (7i) und eine ODER-Schaltung (9i) an den Eingang des Demultiplexers (1i) angeschlossen ist.

7. Knoten-Koppelfeld nach Anspruch 6, dadurch gekennzeichnet, dass das Register (4i) zwischen einem zweiphasigen Decodierkreis (5i) und einem zweiphasigen Codierkreis (6i) eingefügt ist.

8. Knoten-Koppelfeld nach Anspruch 2, dadurch gekennzeichnet, dass der Dialog zwischen zwei Knoten (i–j), eines Knotens oder eines Moduls (i) mit dem Lenkungs- und Wegsteuerungsmodul (MGR) des Knotens, über eine Leitung erfolgt, die einen Demultiplexer (11i–11j) enthält, dessen Eingang an den Eingang (Ei–Ej) des betreffenden Eingangsmoduls, und dessen Ausgänge, deren Anzahl gleich der Zahl der Eingangs-Ausgangsmoduln eines Knotens ist, an einen Multiplexer (10j–10i) des Ausgangsmoduls (j) angeschlossen sind, an den der Eingangsmodul angeschlossen ist, wobei der betreffende Demultiplexer (11i–11j) und der betreffende Multiplexer (10i–10j) vom Automaten (3i–3j) des betreffenden Moduls gesteuert werden, der die Adresse des Zielendgeräts übermittelt.

9. Knoten-Koppelfeld nach Anspruch 3, dadurch gekennzeichnet, dass die Verbindung zwischen einem Modul i und dem Lenkungs- und Wegsteuerungsmodul (MGR) über eine erste Leitung (L1) erfolgt, die eine Wegsteuerungsanforderung übermittelt und an den Lenkungs- und Wegsteuerungsmodul (MGR) über einen Multiplexer (10g) angeschlossen ist, der so viele Eingänge hat, wie es Moduln in einem Knoten gibt, und einen Ausgang zum Lenkungsmodul hat, und über eine zweite Leitung (L2) erfolgt, die die Antwort des Lenkungs- und Wegsteuerungsmoduls über einen Demultiplexer (11g) übermittelt, der einen Eingang und eine Anzahl von Ausgängen hat, die gleich der Anzahl von Moduln im betreffenden Knoten ist, wobei die Verbindungen zwischen einem Modul und dem Lenkungs- und Wegsteuerungsmodul, die Nutzinformationen übermitteln, über Bus-Leitungen erfolgen, wobei ein Wegsteuerungs-Bus (BR) dem Lenkungs- und Wegsteuerungsmodul die Adresse des Zielendgeräts übermittelt und die Bezeichnungsinformation des Ausgangsmoduls des Knotens erhält, ein Bus (BV) die Forderung nach Wertigkeitsinformationen des Zustandes des zukünftigen Knotens übermittelt, ein Bus (BEi) die Zustandsinformation der benachbarten Knoten übermittelt und ein Bus (Bem) über eine Schleife (13i) den Zustand des anfordernden Moduls (i) ausgibt.

10. Knoten-Koppelfeld nach Anspruch 9, dadurch gekennzeichnet, dass der Lenkungs- und Steuerungsmodul (MGR) einen PROM-Speicher (14) enthält, der alle möglichen, vorberechneten Laufwege enthält, an den Wegsteuerungsbus (BR) über ein Pufferregister (16) angeschlossen ist, vom Modul (MGR) geladen wird und über den Wegsteuerungsbus (BR) vom anfordernden Modul die Adresse (AD) des Zielendgeräts erhält, wobei der Speicher (14) eine geordnete Liste der im Knoten verfügbaren Ausgänge erstellt, die dem anfordernden Modul durch den Wegsteuerungsbus (BR) über eine Bewertungsschaltung (15) übermittelt wird.

11. Knoten-Koppelfeld nach Anspruch 4 mit relativ geringer Anzahl von Knoten, dadurch gekennzeichnet, dass jeder Eingangs-Ausgangsmodul (E/Si) in seinem Automatenteil (3) Mittel enthält, die es ihm ermöglichen, die Wegsteuerung auszuführen.

12. Knoten-Koppelfeld nach Anspruch 11, dadurch gekennzeichnet, dass jeder Modul einen ersten Untermodul (SE1), der den Transport und den Empfang der Informationswörter durchführt, einen zweiten Untermodul (SE2), der ein Interface zwischen dem Sende-Empfangsteil des ersten Untermoduls (SE1) und einem sechsten Modul (SE6) herstellt, der die Abfolge der Abläufe festlegt, einen dritten Untermodul (SE3), der die Decodierung der Netzworte gewährleistet, einen vierten Untermodul (SE4) mit einem Speicher (27), der den besten Ausgang in Abhängigkeit vom Inhalt des Speichers (27) liefert, und einen fünften Untermodul (SE5) enthält, der alle nötigen Massnahmen zur Zeitsteuerung durchführt und vorzugsweise Zähler enthält, die von einem siebten Untermodul (SE7), der durch eine Uhr gebildet ist, versorgt wird.

0 113 272

FIG_1

FIG_2

15

# FIG_3

LS
(liaisons sortantes)

Noeud
N(X;Y;Z)

LE
(liaisons
ertrantes)

MS

M (3;4)

# FIG_5

B'

B

C

A

N°3

E   D

+
y

+
0   X

FIG_4

FIG_6

FIG_7

FIG_8

FIG_9

FIG_10

FIG_11

# FIG_12

BE1    BE8

Module E/S 1 — 131

Be 8,1

Module E/S 8 — 138

Be 1,8

# FIG_13

(a) L1 — A

(b) L2 — B

(c) BR — add — rr

(d) RAD

(e) Sortie PROM

# FIG_14

Maille m

k    K'

i    i'

N₁    N₂

FIG_15